(19) **Europäisches Patentamt / European Patent Office / Office européen des brevets**

(11) **EP 1 645 588 B1**

(12) **EUROPEAN PATENT SPECIFICATION**

(45) Date of publication and mention
of the grant of the patent:
**10.07.2013 Bulletin 2013/28**

(51) Int Cl.:
*C08J 9/04* (2006.01)     *B32B 27/00* (2006.01)
*C08L 53/02* (2006.01)

(21) Application number: **04747830.0**

(86) International application number:
**PCT/JP2004/010441**

(22) Date of filing: **15.07.2004**

(87) International publication number:
**WO 2005/005527 (20.01.2005 Gazette 2005/03)**

(54) **HEAT-SHRINKABLE FOAM FILMS**

WÄRMESCHRUMPFBARE SCHAUMFOLIEN

FILMS DE MOUSSE THERMORETRACTABLES

(84) Designated Contracting States:
**BE DE FR GB IT**

(30) Priority: **15.07.2003   JP 2003274418**
**21.08.2003   JP 2003297642**
**21.08.2003   JP 2003297645**

(43) Date of publication of application:
**12.04.2006   Bulletin 2006/15**

(73) Proprietor: **DENKI KAGAKU KOGYO KABUSHIKI KAISHA**
**Tokyo 103-8338 (JP)**

(72) Inventors:
• **TOYA, Hideki**
**Ichihara-shi,**
**Chiba 2908588 (JP)**

• **SATO, Eiji**
**Ichihara-shi,**
**Chiba 2908588 (JP)**
• **SHIMA, Yuji**
**Ichihara-shi,**
**Chiba 2908588 (JP)**

(74) Representative: **Hartz, Nikolai**
**Wächtershäuser & Hartz**
**Patentanwaltspartnerschaft**
**Ottostrasse 4**
**80333 München (DE)**

(56) References cited:
**WO-A-94/28058      JP-A- 3 007 332**
**JP-A- 3 109 441      JP-A- 4 236 247**
**JP-A- 59 145 220      JP-A- 2000 007 806**

EP 1 645 588 B1

**Description**

TECHNICAL FIELD

The present invention relates to a foamed film which presents a heat shrinkable film excellent in heat shrinkage, anti-natural shrinkage and heat insulating properties, a heat shrinkable foamed multilayer film, a label employing it and a container covered therewith.

BACKGROUND ART

Heretofore, for the sale of canned coffees, etc., metal can containers made of aluminum or steel have been widely used. To sell such beverages hot, for example, a canned product discharged from a product storage section of a vending machine, is led to an induction heating device provided inside of the product outlet, and the canned product is rapidly heated to a temperature for sale hot before taken out from the product outlet, so that it is sold as a hot product. Such a temperature for sale hot is usually considered to be proper at a level of 60°C, but since such a hot metal can will be grabbed by a hand, it may be too hot, and it is desired to overcome such a problem.
As a heat-insulating label to solve such a problem, an foamed polystyrene label has been proposed (JP-A-01-240473). Its heat insulating property is good, but it has problems such that due to surface irregularities, printing can not satisfactorily be carried out, and its natural shrinkage is so large that it can not be applied as a label to various bottles, or printing is likely to be out of alignment.
JP 59 145 220 A relates to a foamed film for a label. JP-A-4 236 247 relates to a foam of high strength styrene resin having high foaming moldability. JP 2000 007806 A relates to a thermally shrinking foamed film for use as a label. JP-A-3 007 332 relates to a heat shrinkable foamable polystyrene composite sheet of good dimensional stability.

DISCLOSURE OF THE INVENTION

Under the above mentioned circumstances, the present invention is to provide a foamed film which is excellent in impact strength, rigidity, heat shrinkage and heat insulating properties and which shows a good finishing property upon heat shrinkage, a heat shrinkable multilayer foamed film, a label employing it, and a container covered therewith.
The present inventors have conducted an extensive research to solve the above problems, and as a result, have found that a film comprising a foamed layer which is made of a composition comprising, as the main component, a block copolymer of a certain specific vinyl aromatic hydrocarbon with a conjugated diene and which has a specific thickness and specific gravity, or a heat shrinkable multilayer film comprising a foamed layer and a specific non-foamed layer, has a good shrinkability and anti-natural shrinkability and is excellent in heat-insulating properties, and thus solves the above problems. The present invention has been accomplished on the basis of such a discovery.
Thus, the present invention provides the following:

1. A foamed film characterized by having at least one foamed layer which contains a resin composition comprising from 20 to 100 parts by mass of the following (a) and from 0 to 80 parts by mass of the following (b) and which has a thickness of from 30 to 200 $\mu$m and a specific gravity of from 0.3 to 0.9:

(a) a block copolymer wherein the ratio of a vinyl aromatic hydrocarbon to a conjugated diene is from 50/50 to 90/10,
(b) at least one vinyl aromatic hydrocarbon polymer selected from the following (i) to (v):

(i) a block copolymer of a vinyl aromatic hydrocarbon with a conjugated diene,
(ii) a vinyl aromatic hydrocarbon polymer,
(iii) a copolymer of a vinyl aromatic hydrocarbon with (meth)acrylic acid,
(iv) a copolymer of a vinyl aromatic hydrocarbon with a (meth)acrylate, and
(v) a rubber-modified styrene polymer.

2. The foamed film according to the above 1, wherein the uniaxial elongation viscosity $\eta$ at 120°C of the resin composition satisfies the following condition:

$$2.5 > \eta 1.5 / \eta 1 > 1.1$$

$\eta 1$: elongation viscosity at Hencky strain 1
$\eta 1.5$: elongation viscosity at Hencky strain 1.5

3. The foamed film according to the above 1, wherein the above (a) is a block copolymer of the following (1) and (2):

(1) the mass ratio of the vinyl aromatic hydrocarbon to the conjugated diene is from 60/40 to 90/10,
(2) the mass ratio of a group of vinyl aromatic hydrocarbon polymer blocks having a weight average molecular weight of less than 5,000 to a group of vinyl aromatic hydrocarbon polymer blocks having a weight average molecular weight of at least 5,000, is from 60/40 to 90/10.

4. The foamed film according to any one of the above 1 to 3, wherein (a) the block copolymer is a styrene/butadiene block copolymer, and (b) the vinyl aromatic hydrocarbon polymer is at least one polymer selected from the group consisting of a polystyrene, a styrene/methacrylic acid copolymer, a styrene/methyl methacrylate copolymer, a styrene/n-butyl acrylate copolymer, a styrene/n-butyl acrylate/methyl methacrylate copolymer and an impact-resistant polystyrene.

5. A foamed multilayer film having at least one foamed layer as defined in any one of the above 1 to 4 and at least one non-foamed thermoplastic resin layer.

6. The foamed multilayer film according to the above 5, wherein at least one outer layer in the case of three or more layers, or one layer in the case of two layers, is a layer formed from the following (b') vinyl aromatic hydrocarbon polymer:

(b') at least one vinyl aromatic hydrocarbon polymer selected from the following (i') to (v'):

(i') a block copolymer of a vinyl aromatic hydrocarbon with a conjugated diene,
(ii') a vinyl aromatic hydrocarbon polymer,
(iii') a copolymer of a vinyl aromatic hydrocarbon with (meth)acrylic acid,
(iv') a copolymer of a vinyl aromatic hydrocarbon with a (meth)acrylate, and
(v') a rubber-modified styrene polymer.

7. A heat shrinkable foamed film obtained by stretching the foamed film or the foamed multilayer film as defined in any one of the above 1 to 6.

8. A heat shrinkable foamed multilayer film having a heat shrinkable film laminated on the foamed film or the foamed multilayer film as defined in any one of the above 1 to 7.

9. The heat shrinkable foamed multilayer film according to the above 7 or 8, wherein the heat shrinkage is at least 10% at 70°C in 10 seconds.

10. The heat shrinkable foamed multilayer film according to any one of the above 7 to 9, wherein the natural shrinkage is at most 2.5% at 40°C for seven days.

11. A heat shrinkable label made of the heat shrinkable foamed multilayer film as defined in any one of the above 7 to 10.

12. A container covered with the heat shrinkable label as defined in the above 11.

EFFECTS OF THE INVENTION

The foamed film employing a block copolymer or a block copolymer composition of the present invention, is excellent in anti-natural shrinkage, impact strength, rigidity, heat shrinkability, printing properties and heat insulating properties and has a good finishing property upon heat shrinkage, and it is suitably used as a heat shrinkable label, a heat shrinkable cap seal or a packaging film, and it is particularly suitable as a label for a container containing a hot product.

BEST MODE FOR CARRYING OUT THE INVENTION

Various components to be used for the block copolymer or the block copolymer composition composed mainly thereof, which constitutes the heat shrinkable foamed film, the heat shrinkable multilayer film or the heat shrinkable label of the present invention, are as follows.

The vinyl aromatic hydrocarbon to be used for the block copolymer (a) of the vinyl aromatic hydrocarbon with the conjugated diene to be used in the present invention, may, for example, be styrene, o-methylstyrene, p-methylstyrene, p-tert-butylstyrene, 2,4-dimethylstyrene, 2,5-dimethylstyrene, $\alpha$-methylstyrene, vinyl naphthalene or vinyl anthracene. Particularly, it may usually be styrene.

The conjugated diene to be used for the production of the block copolymer (a) to be used in the present invention,

may, for example, be 1,3-butadiene, 2-methyl-1,3-butadiene (isoprene), 2,3-dimethyl-1,3-butadiene, 1,3-pentadiene or 1,3-hexadiene. Particularly, it may usually be 1,3-butadiene or isoprene.

The mass ratio of the vinyl aromatic hydrocarbon to the conjugated diene is from 50/50 to 90/10, preferably from 65/35 to 85/15. If the mass ratio of the vinyl aromatic hydrocarbon is less than 50 mass%, the rigidity of the film tends to be low, and if it exceeds 90 mass%, the stretching temperature during the production of the film tends to be high, and further, the heat shrinkability of the film tends to be poor, and no adequate impact resistance of the film tends to be obtained, whereby the film will not be practically useful.

The structure of the block copolymer to be used in the present invention and the structure of each block section, are not particularly limited. The structure of the block copolymer may, for example, be a linear or stelliform block copolymer comprising polymer blocks composed mainly of a vinyl aromatic hydrocarbon and polymer blocks composed mainly of a conjugated diene. Further, the vinyl aromatic hydrocarbon copolymerized in a polymer block composed mainly of the vinyl aromatic hydrocarbon or in the polymer block composed mainly of the conjugated diene, may be uniformly distributed or distributed in a tapering (gradually reducing) fashion in the polymer block. ,

The block proportion of the vinyl aromatic hydrocarbon in the block copolymer (a) is not particularly limited, but it is preferably at most 85%. If the block proportion exceeds 85%, the heat shrinkability tends to decrease. Here, the block proportion of the vinyl aromatic hydrocarbon is one obtained by the following formula:

$$\texttt{Block proportion (\%) = (W1/W0) × 100}$$

wherein WI is the mass of block polymer chains of the vinyl aromatic hydrocarbon in the copolymer, and WO is the total mass of the vinyl aromatic hydrocarbon in the block copolymer. Here, W1 in the above formula was obtained in such a manner that the block copolymer was subjected to ozone decomposition by the method disclosed in a known literature "Y. TANAKA, et. al., RUBBERCHEMISTRY AND TECHNOLOGY, 58, p. 16 (1985)", and the obtained vinyl aromatic hydrocarbon polymer component was measured by gel permeation chromatograph (hereinafter referred to simply as GPC), and the molecular weight corresponding to the chromatogram was obtained from a calibration curve prepared by using the standard polystyrene and styrene oligomer, whereby one having a number average molecular weight exceeding 3,000 was quantified from the peak area. As the detector, an ultraviolet spectroscopic detector having a wavelength set at 254 nm, was used.

The number average molecular weight of the block copolymer (a) to be used in the present invention is preferably from 40,000 to 500,000, particularly preferably from 80,000 to 300,000. If it is less than 40,000, no adequate rigidity or impact resistance of the block copolymer composition tends to be obtained. On the other hand, if it exceeds 500,000, the processability tends to deteriorate. Here, the number average molecular weight of the block copolymer in the present invention was obtained by a usual method employing gel permeation chromatograph (hereinafter referred to simply as GPC).

The mass ratio of a group of vinyl aromatic hydrocarbon polymer blocks having a weight average molecular weight of less than 5,000 to a group of vinyl aromatic hydrocarbon polymer blocks having a weight average molecular weight of at least 5,000, is from 60/40 to 90/10. If this mass ratio is less than 60/40, the anti-natural shrinkage when formed into a heat shrinkable film tends to be low, and if it exceeds 90/10, the processability tends to deteriorate. Here, the group of vinyl aromatic hydrocarbon polymer blocks means an aggregate of vinyl aromatic hydrocarbon polymer components obtained by subjecting the block copolymer to ozone decomposition by the method disclosed in "Y. TANAKA, et. al., RUBBERCHEMISTRY AND TECHNOLOGY, 58, p. 16 (1985)", and such components are measured by GPC, whereupon the mass ratio can be obtained from the area ratio.

The block copolymer (a) to be used in the present invention may take any form so long as the above conditions are satisfied. However, those having the following formulae may be mentioned as preferred examples. Among them, one having a form having X is preferred, since the after-mentioned elongation viscosity ratio can easily be thereby satisfied.

a. A-C-B
b. A-B-C-B
c. A-C-B-A
d. A-B-C-B-A
e. A-B-A-B-A
f. A-C-B-C-B
g. (A-C-B)n-X
h. (A-C-B-A)n-X
i. (A-C-B-C-B)n-X
k. A-B-A, A-C-A

l. (A-B)n-X, (A-C)n-X
m. (A-B-C)n-X
n. (A-B-C-A)n-X

The above formulae represent the chemical structures i.e. the sequential arrangements of a block polymer chain A composed substantially of the vinyl aromatic hydrocarbon, a copolymer chain B comprising the vinyl aromatic hydrocarbon and the conjugated diene, and a block polymer chain C composed substantially of the conjugated diene. Even when there are a plurality of A, B or C in the formula, the molecular weights, the mass ratios of the conjugated dienes, and the state of distribution of the vinyl aromatic hydrocarbon and the conjugated diene in the copolymer chains may be independent, respectively, and are not required to be the same. The molecular weight and the compositional distribution of the copolymer chain B may be controlled mainly by the amount and the method for addition of the vinyl aromatic hydrocarbon monomer and the conjugated diene monomer.

Further, in the above formulae, X is a residue of a polyfunctional coupling agent or a residue of a polyfunctional organic lithium compound to be used as an initiator, and n is an integer of from 2 to 4. The polyfunctional coupling agent to be used in the present invention may, for example, be silicon tetrachloride or epoxidized soybean oil. The polyfunctional organic lithium compound may, for example, be hexamethylene dilithium, butadieniyl dilithium or isoprenyl dilithium.

Now, the production of the block copolymer (a) of the present invention will be described. The block copolymer (a) can be produced by polymerizing a vinyl aromatic hydrocarbon with a conjugated diene using an organic lithium compound as an initiator in an organic solvent. As the organic solvent, an aliphatic hydrocarbon such as butane, pentane, hexane, isopentane, heptane, octane or isooctane, an alicyclic hydrocarbon such as cyclopentane, methylcyclopentane, cyclohexane, methylcyclohexane or ethylcyclohexane, or an aromatic hydrocarbon such as ethylbenzene or xylene, may, for example, be used.

The organic lithium compound is a compound having at least one lithium atom bonded in the molecule, and for example, a monofunctional organic lithium compound such as ethyllithium, n-propyllithium, isopropyllithium, n-butyllithium, sec-butyllithium or tert-butyllithium, or a polyfunctional organic lithium compound such as hexamethylene dilithium, butadienyl dilithium or isoprenyl dilithium, may be used.

The vinyl aromatic hydrocarbon and the conjugated diene to be used in the present invention may be those which are mentioned above, and one or more of them may respectively be selected to be used for the polymerization. And, in living anion polymerization using the above mentioned organic lithium compound as an initiator, substantially whole amounts of the vinyl aromatic hydrocarbon and the conjugated diene subjected to the polymerization reaction will be converted to the polymer.

In the present invention, the molecular weight of the block copolymer (a) can be controlled by the amount of the initiator to be added to the entire amount of the monomers.

Among the groups of vinyl aromatic hydrocarbon polymer blocks in the present invention, the mass ratio of the component having a molecular weight of less than 5,000 to the component having a molecular weight of at least 5,000, can be adjusted by controlling the molecular weights or compositional distributions of A, B and C in the above mentioned structural formulae and the block proportion of the copolymer.

The block proportion of the block copolymer may be controlled also by the amount of the randomization agent added at the time of polymerizing the vinyl aromatic hydrocarbon with the conjugated diene. As the randomization agent, tetrahydrofuran (THF) is mainly employed. However, other ethers or amines, thioethers, phosphoramides, alkylbenzene sulfonates, or potassium or sodium alkoxides, may, for example, be also used. Suitable ethters include, in addition to THF, dimethyl ether, diethyl ether, diphenyl ether, diethylene glycol dimethyl ether and diethylene glycol dibutyl ether. As the amines, tertiary amines such as trimethylamine, triethylamine and tetramethylethylenediamine, as well as cyclic amines may, for example, be used. Further, triphenylphosphine, hexamethylphosphoramide, potassium or sodium alkylbenzene sulfonate, or potassium or sodium butoxide, may, for example, be also used as the randomization agent.

The amount of randomization agent is preferably from 0.001 to 10 parts by mass, per 100 parts by mass of all charged monomers. The timing of the addition may be before the initiation of the polymerization reaction or before the polymerization of copolymer chains. Further, it may be additionally added, as the case requires.

Further, the block proportion can be controlled also by the supply rates of the vinyl aromatic hydrocarbon monomer and the conjugated diene monomer.

The block copolymer thus obtained will be inactivated by an addition of a polymerization terminator such as water, an alcohol or carbon dioxide in an amount sufficient to inactivate the active terminals. As a method for recovering the copolymer from the obtained block copolymer solution, an optional method may be employed such as a method of precipitating it by a poor solvent such as methanol, a method of evaporating the solvent by a heating roll or the like for precipitation (a drum dryer method), a method of concentrating the solution by a concentrator and then removing the solvent by a vent system extruder, or a method of dispersing the solution in water, blowing steam thereinto to heat and remove the solvent thereby to recover the copolymer (a steam stripping method).

The polymer (b) to be used in the present invention is preferably at least one vinyl aromatic hydrocarbon polymer selected from the following (i) to (v):

(i) a block copolymer of a vinyl aromatic hydrocarbon with a conjugated diene,
(ii) a vinyl aromatic hydrocarbon polymer,
(iii) a copolymer of a vinyl aromatic hydrocarbon with (meth)acrylic acid,
(iv) a copolymer of a vinyl aromatic hydrocarbon with a (meth)acrylate, and
(v) a rubber-modified styrene polymer.

The above block copolymer (i) of a vinyl aromatic hydrocarbon with a conjugated diene may be the same or different from the above (a). As the vinyl aromatic hydrocarbon polymer (ii), a homopolymer of the above mentioned vinyl aromatic hydrocarbon, or a copolymer of two or more of them may be employed. As a particularly common one, a polystyrene or a polystyrene having a syndiotactic structure may, for example, be mentioned. It is particularly effective to use one having a weight average molecular weight of at least 1,000,000 in an amount of from 0.5 to 30%, further preferably, one having a weight average molecular weight of at least 3,000,000 in an amount of from 1 to 10%, whereby the after-mentioned elongation viscosity ratio can easily be satisfied.

The copolymer (iii) of a vinyl aromatic hydrocarbon with (meth)acrylic acid, is obtainable by polymerizing the above mentioned vinyl aromatic hydrocarbon with (meth)acrylic acid. For the polymerization, one or more types may be selected for use with respect to the respective monomers. The (meth)acrylic acid may be acrylic acid or methacrylic acid. The copolymer (iii) is preferably a styrene/methacrylic acid copolymer.

The above copolymer (iv) of a vinyl aromatic hydrocarbon with a (meth)acrylate can be obtained by polymerizing the above mentioned vinyl aromatic hydrocarbon with a (meth)acrylate. For the polymerization, one or more types may be selected for use with respect to the respective monomers. The (meth)acrylate may, for example, be methyl acrylate, ethyl acrylate, acrylic acid-n-butyl (or n-butyl acrylate), isobutyl acrylate, hexyl acrylate, (2-ethyl) hexyl acrylate, methacrylic acid methyl (or methyl methacrylate), ethyl methacrylate, butyl methacrylate or (2-hydroxy)ethyl methacrylate.

The above copolymer (iv) is preferably a styrene/methyl methacrylate copolymer, a styrene/n-butyl acrylate copolymer or a styrene/n-butyl acrylate/methyl methacrylate copolymer.

The copolymer (iii) or (iv) is obtainable by polymerizing a monomer mixture comprising a vinyl aromatic hydrocarbon and (meth)acrylic acid, or a vinyl aromatic hydrocarbon and a (meth)acrylate, in a mass ratio of 5-99:95-1, preferably 40-99:60-1, more preferably 70-99:30-1.

The above rubber-modified styrene polymer (v) can be obtained by polymerizing a mixture comprising a vinyl aromatic hydrocarbon or a monomer copolymerizable therewith, and various elastomer. As the vinyl aromatic hydrocarbon, one described in the production of the above block copolymer (a) may be employed, and as the monomer copolymerizable therewith, (meth)acrylic acid or a (meth)acrylate may, for example, be used. Further, as the elastomer, butadiene rubber, a styrene/butadiene rubber, a styrene/butadiene block copolymer elastomer, chloroprene rubber or natural rubber may, for example, be used.

As the rubber-modified styrene polymer (v), high impact polystyrene (HIPS), a MBS resin or a MBAS resin is preferred, and high impact polystyrene is more preferred.

In the present invention, the mass ratio of the block copolymer (a) to the polymer (b) i.e. (i) to (v), is (a) 20-100: (b) 0-80, preferably (a) 40-99.5:(b) 0.5-60, more preferably (a) 60-99:(b) 1-40, on such a basis that the total amount of (a) and (b) is 100. If the block copolymer (a) is less than 20 parts by mass, the shrinkability of the heat shrinkable film tends to be low, and breakage is likely to result during the film formation, such being undesirable.

It is preferred that the uniaxial elongation viscosity $\eta$ at 120°C of the block copolymer or the block copolymer composition to be used in the present invention, satisfies the following condition:

$$2.5 > \eta 1.5 / \eta 1 > 1.1$$

$\eta 1$: elongation viscosity at Hencky strain 1
$\eta 1.5$: elongation viscosity at Hencky strain 1.5

The uniaxial elongation viscosity is known as an index for the forming processability of a polymer material (reference: Lecture-Rheology, compiled by Japan Society of Rheology, published by Kobunshikankokai, p. 111-116). In the foamed film, foams are preferably in the state of closed cells. However, closed cells become open cells upon rupture. If such open cells will further grow, the film is likely to break. Thus, a film which maintains closed cells without rupture, is one having a good uniaxial elongation viscosity characteristic, i.e. one having a high strain hardening property.

The strain hardening property means such a nature that when a material undergoes a substantial deformation by uniaxial elongation, it shows a sharp increase in the elongation viscosity. Here, in the case of uniaxial elongation, the strain at the time of deformation is defined by a natural logarithm of the elongation ratio, which is so-called Hencky strain. The index for the strain hardening property can be obtained by taking a ratio of the elongation viscosity at the time of a small deformation (i.e. in the case of Hencky strain 1) to the elongation viscosity at the time of a large deformation (i.e. in the case of Hencky strain 1.5).

Such an elongation viscosity ratio is preferably within a range of from 1.1 to 2.5, more preferably within a range of from 1.2 to 2.1. If it is less than 1.1, rupture of foams is likely to be brought about at the time of foaming, and if it exceeds 2.5, the elongation viscosity of the material itself tends to be high and tends to be hardly foamed. Although the temperature of the resin discharged from the extrusion die at the time of preparing the foamed film is in the vicinity of 200°C, the temperature for the measurement is set to be 120°C, since it is preferably close to the temperature immediately before the foams will be set i.e. immediately before the resin will be solidified in contact with e.g. a cooling roll.

For the strain hardening property, the ratio in the elongation viscosity between the case of strain 1 (corresponding to 2.7 times the uniaxial stretching ratio) and the case of strain 1.5 (corresponding to 4.5 times the uniaxial stretching ratio) was taken as an index.

Further, as the measuring device, one so-called Meissner model is common, and such a measuring device is commercially available.

To the block copolymer or the block copolymer composition to be used in the present invention, various additives may be incorporated as the case requires. As such additives, various stabilizers, processing assistants, light resistance improving agents, softening agents, plasticizers, antistatic agents, anti-fogging agents, mineral oils, fillers, pigments, flame retardants, and lubricants may, for example, be mentioned.

The above stabilizers may, for example, be a phenol type antioxidant such as 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate or 2,6-di-tert-butyl-4-methylphenol, and a phosphorus type antioxidant such as trisnonylphenyl phosphite. The processing assistants, light resistance improving agents, softening agents, plasticizers, antistatic agents, anti-fogging agents, mineral oils, fillers, pigments and flame retardants, may, for example, be common known products.

Further, as the lubricants, dimethylpolysiloxane, methylphenylpolysiloxane, a fatty acid, a fatty acid glycerol ester, a fatty acid amide and a hydrocarbon type wax may, for example, be mentioned.

The block copolymer composition to be used in the present invention is obtained by mixing (a) and (b). The mixing method is not particularly limited. For example, a Henschel mixer, a ribbon blender, a V blender or the like may be used for dry blending, and further, the composition may be melted and pelletized by an extruder. Otherwise, they may be mixed during the production of the respective polymers or at a stage before initiation of the polymerization, during the polymerization reaction or during the post treatment of the polymers.

In a case where additives are incorporated as the case requires, such additives may, for example, be further added to the above (a) and (b) in a predetermined proportion, followed by mixing by the same mixing method as described above.

The foamed film of the present invention is required to have a foamed layer employing the above composition. Formation of the foamed layer may be carried out by a method which is commonly employed, i.e. any one of a chemical foaming method wherein a resin is foamed by a gas generated by thermal decomposition of a chemical foaming agent when the resin and the chemical foaming agent are melt-kneaded, and a physical foaming method wherein a gas is injected into a resin melted in an extruder to let it foam.

The foamed film of the present invention preferably has a specific gravity of from 0.3 to 0.9, more preferably from 0.3 to 0.8. If the specific gravity is less than 0.3, foams tend to rupture during the film formation, and if it exceeds 0.9, the heat insulating property tends to be low, such being undesirable.

Further, the thickness of the foamed layer in the foamed film of the present invention is preferably from 30 to 200 $\mu$m, more preferably from 50 to 150 $\mu$m. If it is less than 30 $\mu$m, the heat insulating property tends to be low, and if it exceeds 200 $\mu$m, creases are likely to form when the heat shrinkable label is applied under heating to a beverage container, whereby the appearance is likely to be impaired, such being undesirable.

As specific examples of the chemical foaming agent to be used for the chemical foaming method, a mixture of sodium bicarbonate and citric acid, azodicarbonamide, azobisisobutyronitrile, diazoaminobenzene, N,N'-dinitrosopentamethylenetetramine, N,N'-dimethyl-N,N'-dinitroterephthalamide, benzenesulfonyl hydrazide, p,p'-oxybisbenzenesulfonyl hydrazide, a carbonate and an organic acid may, for example, be mentioned. However, a mixture of sodium bicarbonate and citric acid is preferably employed, whereby a foaming gas to be generated, is carbon dioxide gas. The method for adding the chemical foaming agent is not particularly limited, and it may be a method of dry blending it to the resin pellets, a method of adding it in a hopper of an extruder by means of a quantitative feeder, or a method of adding it by preparing a masterbatch containing the same resin as the main raw material as the base. The amount of the chemical foaming agent to be added, may be suitably adjusted depending upon the desired foaming ratio and the amount of the gas generated by the foaming agent.

As specific examples of the physical foaming agent, carbon dioxide gas, propane, butane, n-pentane, dichlorodifluoromethane, dichloromonofluoromethane, trichloromonofluoromethane, methanol, ethanol and water, may, for example, be mentioned. From the viewpoint of safety, carbon dioxide gas is suitably employed. As a method for adding the physical foaming agent, a method of supplying it to the center zone of an extruder or to the center zone of the first stage extruder in the case where a tandem extruder is employed, may be mentioned. Further, it may be a method wherein resin pellets having a foaming gas impregnated therein, are charged into an extruder to obtain a foamed sheet. The amount of the physical foaming agent to be added may suitably be adjusted depending upon the desired foaming ratio.

In a case where additives are incorporated as the case requires, such additives may, for example, be added to the above (a) and (b) in a prescribed proportion, followed by the same mixing method as described above.

At the time of preparing the foamed film of the present invention, a foam-adjusting agent, a crosslinking agent, a foaming assistant, an antistatic agent, a filler, a lubricant, a stabilizer, a plasticizer, an ultraviolet absorber, an antioxidant, a pigment, etc., may be mixed, as the case requires, within a range not to impair the purpose of the present invention such as the physical properties of the foamed film. The filler may, for example, be a metal oxide such as mica, silica, alumina, potassium titanate whisker, calcium oxide or titanium oxide, wood powder, talc, calcium carbonate, magnesium carbonate, calcium silicate, glass fiber, glass flake or glass beads. A conductive material, such as a metal fiber such as steel fiber, aluminum fiber, brass fiber, copper fiber or stainless steel fiber, carbon fiber, metal-coated carbon fiber, carbon black, graphite powder, or metal-coated glass fiber, may also be added.

The foamed film of the present invention is required to be such that at least one layer is made of a foam of the above described block copolymer or block copolymer composition. However, it is also preferred that the foamed film is a multilayer film wherein at least one outer layer or one layer in the case of two layers, is a layer formed from the following (b'):

(b') at least one vinyl aromatic hydrocarbon polymer selected from the following (i') to (v'):

(i') a block copolymer of a vinyl aromatic hydrocarbon with a conjugated diene,
(ii') a vinyl aromatic hydrocarbon polymer,
(iii') a copolymer of a vinyl aromatic hydrocarbon with (meth)acrylic acid,
(iv') a copolymer of a vinyl aromatic hydrocarbon with a (meth)acrylate, and
(v') a rubber-modified styrene polymer (provided that in the above (iii') and (iv'), the mass ratio of the vinyl aromatic hydrocarbon to the comonomer copolymerized with the vinyl aromatic hydrocarbon, is 5-99:95-1).

Here, (i') in (b') may be the same or different from (a). Further, the polymers (ii') to (v') in (b') may, respectively, be the same or different from the polymers (ii) to (v) in (b).

The outer layer or one layer in the case of two layers, is more preferably a layer formed of at least one polymer component selected from the group consisting of a styrene/butadiene block copolymer, a polystyrene, a styrene/methacrylic acid copolymer, a styrene/methyl methacrylate copolymer, a styrene/n-butyl acrylate copolymer, a styrene/n-butyl acrylate/methyl methacrylate copolymer, a high impact polystyrene (HIPS), a MBS resin and a MBAS resin.

Here, for the above MBS resin or the MBAS resin, firstly, a rubber latex of polybutadiene or a copolymer of butadiene with styrene, is produced by a known emulsion polymerization method. At that time, a crosslinking agent or a chain transfer agent may be employed. Then, for the MBS resin, styrene, methyl methacrylate and/or an alkyl acrylate is added to this rubber latex, and for the MBAS resin, styrene, methyl methacrylate, acrylonitrile and/or an alkyl acrylate is added to such a rubber latex, followed by graft polymerization. The alkyl acrylate to be used for the MBS resin or for the MBAS resin may be an alkyl acrylate mentioned with respect to the above copolymer of the vinyl aromatic hydrocarbon (iii) with a (meth)acrylate.

The heat shrinkable foamed film of the present invention may be obtained by monoaxially, biaxially or multiaxially stretching a foamed sheet or a foamed film extruded by a known T-die method or a tubular method employing the above described block copolymer or block copolymer composition. As an example for monoaxial stretching, a method of stretching an extruded foamed sheet in a direction perpendicular to the extrusion direction by a tenter, a method of stretching an extruded tubular foamed film in the circumferential direction, or a method of stretching an extruded foamed sheet in the extrusion direction by rolls, may, for example, be mentioned. As an example of biaxial stretching, a method wherein an extruded foamed sheet is stretched in the extrusion direction by rolls and then stretched in a direction perpendicular to the extrusion direction by a tenter or the like, or a method wherein an extruded tubular foamed film is simultaneously or separately stretched in the extrusion direction and the circumferential direction.

Further, the heat shrinkable foamed multilayer film of the present invention may be produced by laminating a heat shrinkable film to a foamed film made of the above block copolymer or block copolymer composition, or to a foamed multilayer film having at least one foamed layer made of the block copolymer or block copolymer composition and at least one non-foamed thermoplastic resin layer. The method for lamination may be a common method such as a method employing an adhesive or a method of heating, but if the temperature becomes too high, the heat shrinkable film undergoes shrinkage, such being undesirable. The temperature for lamination is not particularly limited, but a preferred temperature range is lower than 70°C.

Further, the heat shrinkable foamed multilayer film of the present invention may also be obtained in such a manner that the above resins are respectively melted in extrusion machines for front and rear layers and an interlayer (inner layer), and they are multi-layered in a die or by a feed block or the like, followed by monoaxial, biaxial or multiaxial stretching as described above. Here, the inner layer of the multilayer film may not necessarily be a single layer and may, of course, be two or more layers.

Further, the layer ratio of the multilayer film of the present invention is not particularly limited, but the non-foamed layer is preferably at most 50% of the entire thickness to obtain good heat insulating properties and preferably at least 5% to obtain good printing properties.

In the present invention, the stretching temperature is preferably from 60 to 120°C. If it is lower than 60°C, the film is likely to rupture at the time of stretching, and if it exceeds 120°C, good shrinking characteristics tend to be hardly obtainable, such being undesirable. It is particularly preferably within a range of from Tg+5°C to Tg+20°C, where Tg is the glass transition temperature of the composition constituting the film. In the case of a multilayer film, with respect to Tg of the polymer composition of the layer which has the lowest Tg, it is particularly preferably within a range of from Tg+5°C to Tg+20°C.

Here, the glass transition temperature (Tg) is one obtained from the peak temperature of the loss modulus.

The stretching ratio is not particularly limited, but is preferably from 1.5 to 8 times. If it is less than 1.5 times, the heat shrinkability tends to be inadequate, and if it exceeds 8 times, stretching tends to be difficult, such being undesirable. In a case where such a film is used as a heat shrinkable label or a packaging material, the heat shrinkage is preferably at least 10% at 70°C in 10 seconds. If the heat shrinkage is less than 10%, a high temperature will be required during the shrinkage, and accordingly, an adverse effect is likely to be given to the article to be covered with this film or label. A preferred heat shrinkage is at least 15% at the same temperature. Further, the natural shrinkage is preferably at most 2.5% at 40°C for seven days. The entire thickness of the heat shrinkage film is preferably from 30 to 200 $\mu$m, more preferably from 50 to 150 $\mu$m.

As an application of the foamed film, the heat shrinkable foamed film or the heat shrinkable foamed multilayer film of the present invention, a heat shrinkable label or a heat shrinkable cap seal, may be mentioned as particularly preferred. Further, such a film may also be useful as a packaging film or the like.

The heat shrinkable label may be prepared by a known method. For example, it may be prepared in such a manner that the stretched film is printed and solvent-sealed so that the stretching direction is aligned with the circumferential direction.

Further, it may be prepared also in such a manner that a printed heat shrinkable label is bonded to a non-stretched foamed film, and then solvent sealing is carried out so that the largely shrinkable direction is aligned to the circumferential direction.

When the heat shrinkable film or the heat shrinkable multilayer film of the present invention is used as a heat shrinkable label, the container to which the label is applied, is not particularly limited, but a metal can container (such as a three piece can and two piece can, or a capped bottle can) made of tin plate, TFS or aluminum, a container made of glass, or a container made of polyethylene terephthalate (referred to simply as PET) is, for example, preferably employed. Further, the film of the present invention has a specific gravity of less than 1, whereby when used as a label for a PET bottle, it can be separated from the container in water and thus has a merit that it is excellent in recycling.

Now, the present invention will be described in further detail with reference to Examples. However, it should be understood that the present invention is by no means restricted to such specific Examples.

EXAMPLE 1

EXAMPLE 1-1 to 1-6 AND COMPARATIVE EXAMPLES 1-1 to 1-5

(A) Components used for heat shrinkable multilayer film

Component (a): Vinyl aromatic hydrocarbon/conjugated diene block copolymers as shown in Table 1 were used.

TABLE 1-1

| Polymer | Proportions of monomer units (mass%) | | Block proportion (mass%) |
|---|---|---|---|
| a1 | Butadiene<br>Styrene | 18<br>82 | 72 |
| a2 | Butadiene<br>Styrene | 26<br>74 | 76 |

(continued)

| Polymer | Proportions of monomer units (mass%) | | Block proportion (mass%) |
|---|---|---|---|
| a3 | Butadiene | 54 | 80 |
| | Styrene | 46 | |
| a4 | Butadiene | 4 | 90 |
| | Styrene | 96 | |

Component (b): Vinyl aromatic hydrocarbon polymers as shown in Table 1-2 were used.

TABLE 1-2

| Polymer | Polymer structure | Proportions of monomer units (mass%) | |
|---|---|---|---|
| b1 | Polystyrene | Styrene | 100 |
| b2 | Styrene/methacrylic acid copolymer | Methacrylic acid | 10 |
| | | Styrene | 90 |
| b3 | Styrene/n-butyl acrylate copolymer | n-Butyl acrylate | 20 |
| | | Styrene | 80 |
| b4 | Styrene/methyl methacrylate copolymer | Methyl methacrylate | 22 |
| | | Styrene | 78 |
| b5 | Styrene/n-butyl acrylate/methyl methacrylate copolymer | n-Butyl acrylate | 14 |
| | | Methyl methacrylate | 7 |
| | | Styrene | 79 |
| b6 | High impact polystyrene | Butadiene | 6 |
| | | Styrene | 94 |

Component (C): Vinyl aromatic hydrocarbon polymers at shown in Table 1-3 were used.

TABLE 1-3

| Polymer | Polymer structure | Proportions of monomer units (mass%) | |
|---|---|---|---|
| c1 | Styrene/butadiene block copolymer | Butadiene | 22 |
| | | Styrene | 78 |
| c2 | Polystyrene | Styrene | 100 |
| c3 | Styrene-n-butyl acrylate copolymer | n-Butyl acrylate | 17 |
| | | Styrene | 83 |
| c4 | Styrene-methyl methacrylate copolymer | Methacrylate | 12 |
| | | Styrene | 88 |
| c5 | High impact polystyrene | Butadiene | 7 |
| | | Styrene | 93 |
| c6 | Styrene-methacrylic acid copolymer | Methacrylic acid | 7 |
| | | Styrene | 93 |

(B) Preparation of film

Using the vinyl aromatic hydrocarbon/conjugated diene block copolymer (a) shown in Table 1-1, the vinyl aromatic hydrocarbon polymer (b) shown in Table 1-2 and the vinyl aromatic hydrocarbon polymer (c) shown in Table 1-3, heat shrinkable multilayer films were prepared to have the blend amounts (mass parts) of the raw material polymers of the respective layers and the layer ratios (%) as shown in Tables 1-4 to 1-5. With respect to Examples 1-1 to 1-6, Comparative Examples 1-1 to 1-3 and Comparative Example 1-5, to the polymer or polymer composition comprising components (a) and (b), 1.5 phr of a chemical foaming agent (Hydrocerol CF-40S, manufactured by Clariant) was added as a foaming agent. In Comparative Example 1-4, no chemical foaming agent was added.

For a film, firstly polymers or polymer compositions corresponding to the respective layers were melted by separate extruders and multi-layered in a T-die to form a sheet having a thickness of 0.4 mm. Then, by means of a biaxial stretching device manufactured by Toyo Seiki Seisaku-sho, Ltd., the sheet is transversely monoaxially stretched five times at a stretching temperature shown in Table 1-4 or 1-5 to obtain a stretched film.

In Tables 1-4 and 1-5, the blend amounts (parts by mass) of the raw material polymers for the respective layers and the layer ratios (%) are shown together with the physical properties.

Further, in Examples, various physical properties of films were measured by the following methods.

(1) Glass transition temperature (Tg)

For the glass transition temperature (Tg) of a polymer composition, the loss modulus was measured by a dynamic viscoelasticity method in accordance with the following procedure, and the glass transition temperature was obtained from the peak value.

(i) Pellets of each polymer (a polymer or polymer composition itself without containing a foaming agent) were heat-pressed under a condition of from 200 to 250°C to prepare a sheet having a thickness of from 0.1 to 0.5 mm.
(ii) From this sheet, a test specimen having a suitable size was cut out and stored for at least 24 hours in a room at 23°C under a relative humidity of 50%, and then the loss modulus specific to the polymer composition in the test specimen was measured by means of the following device (i) while the temperature was changed.

Device (i): Solid viscoelasticity measuring device RAS2 manufactured by Rheometric Scientific Inc. (set temperature range: from room temperature to 130°C, set temperature raising rate: 4°C/min, the measuring frequency: 1 Hz)

(2) Tensile modulus: With respect to the stretched film prepared as described above, the tensile modulus of elasticity in a non-stretched direction was measured at 23°C by means of TENSILON universal tester (RTC-1210A) manufactured by A&D Co., LTD. in accordance with JIS K6871.

(3) Heat shrinkage (%): A film was immersed in warm water of 70°C for 10 seconds, whereupon the heat shrinkage was calculated by the following formula:

$$\text{Heat shrinkage} = \{(L1-L2)/L1\} \times 100$$

where L1 is the length before immersion (in the stretching direction), and L2 is the length after shrinkage by immersion in warm water of 70°C for 10 seconds (in the stretching direction)

(4) Natural shrinkage: The natural shrinkage of a film was measured by the following method.

(i) From a stretched film prepared under the same conditions as the stretched film having the heat shrinkage measured, a test specimen of about 75 mm in the longitudinal direction and about 400 mm in the transverse direction (the stretching direction) was cut out.
(ii) Reference lines were imparted at intervals of 300.0 mm in the transverse direction of this test specimen.
(iii) The stretched film was stored in a tester of an environment of 40°C.
(iv) After storage for 7 days, the film was taken out, and the length L (mm) between the difference lines was measured by means of calipers to 0.1 mm unit.
(v) The natural shrinkage (%) was calculated by the following formula:

$$\text{Natural shrinkage} = (300.0-L)/300.0 \times 100$$

(5) Heat insulating properties: The heat insulating properties of a film were measured by the following method.

(i) A film was cut out in a size of 90 mm in the longitudinal direction and 200 mm in the transverse direction from a stretched film prepared under the same conditions as the stretched film used for the measurement of the heat shrinkage.
(ii) This film was wound on an aluminum bottle can (provided with a cap) having a cylindrical portion with a diameter of 66 mm and heated at 70°C for 10 seconds to obtain a film-covered container.
(iii) Hot water of 65°C was put into this container.

(iv) This container was held by grabbing the film portion with a hand, and the time until it was no longer held by the hand was evaluated by the following standards.

○: It can be held for at least 30 seconds.
X: It can be held for only less than 10 seconds.

(6) Printability: A film was cut out in a size of 75 mm × 400 mm, and an ink (STR722 yellow, manufactured by Dainichiseika Color & Chemicals Mfg. Co., Ltd.) was applied on the surface of the film by a bar coater and evaluated by the following standards. Here, with respect to the multilayer film, the ink was applied to the non-foamed layer.

○: The edges of the applied portion are linear.
×: The edges of the applied portion are waving.

From Tables 1-4 and 1-5, it is evident that the heat shrinkable films of the present invention are excellent in heat shrinkage, anti-natural shrinkage, heat insulating properties and printability.

TABLE 1-4

| | | Examples | | | | | | | | | | |
|---|---|---|---|---|---|---|---|---|---|---|---|---|
| | | 1-1 | | 1-2 | | 1-3 | | 1-4 | | 1-5 | | 1-6 | |
| Non-foamed layer (layer A) | Blend amount (parts by mass) | c1 | 100 | c1 | 90 | c1 | 55 | c3 | 100 | c1 | 85 | c1 | 90 |
| | | c5 | 1.0 | c2 | 10 | c3 | 45 | c5 | 1.2 | c4 | 15 | c6 | 10 |
| | | | | c5 | 1.5 | c5 | 1.0 | | | c5 | 1.8 | c5 | 2.0 |
| Foamed layer (layer B) | Blend amount (parts by mass) | a1 | 100 | a2 | 40 | a1 | 85 | a1 | 80 | a2 | 50 | a1 | 75 |
| | | | | b3 | 60 | b2 | 5 | b1 | 10 | b5 | 50 | b4 | 25 |
| | | | | | | b4 | 10 | b6 | 10 | | | | |
| Layer ratio | | A/B/A =1/8/1 | | A/B/A = 1/8/1 | | A/B/A =1/8/1 | | A/B =1/9 | | A/B =1/9 | | A/B =1/9 | |
| Tg of layer B (°C) | | 70 | | 70 | | 75 | | 76 | | 76 | | 78 | |
| Stretching temperature (°C) | | 80 | | 84 | | 85 | | 89 | | 89 | | 90 | |
| Tensile modulus (MPa) | | 600 | | 790 | | 730 | | 620 | | 620 | | 640 | |
| Heat shrinkage (%) | | 24 | | 20 | | 22 | | 18 | | 17 | | 16 | |
| Natural shrinkage (%) | | 1.4 | | 1.1 | | 1.2 | | 0.9 | | 1.1 | | 0.8 | |
| Heat insulating properties | | ○ | | ○ | | ○ | | ○ | | ○ | | ○ | |
| Printability | | ○ | | ○ | | ○ | | ○ | | ○ | | ○ | |

TABLE 1-5

| | | Comparative Examples | | | | | | | | | |
|---|---|---|---|---|---|---|---|---|---|---|---|
| | | 1-1 | | 1-2 | | 1-3 | | 1-4 | | 1-5 | |
| Non-foamed layer(layer A) | Blend amount (parts by mass) | c1 | 100 | c1 | 100 | c1 | 100 | a1 | 100 | | |
| | | c5 | 1.0 | c5 | 1.0 | c5 | 1.0 | 1.0 | | | |
| | | | | | | | | | | | |

(continued)

| | | Comparative Examples | | | | | | | | |
|---|---|---|---|---|---|---|---|---|---|---|
| | | 1-1 | | 1-2 | | 1-3 | | 1-4 | | 1-5 |
| Foamed layer(layer B) | Blend amount (parts by mass) | a3 | 100 | a4 | 100 | a1 | 15 | | | a1 | 100 |
| | | | | | | b1 | 85 | | | | |
| | | | | | | | | | | | |
| Layer ratio | | A/B/A = 1/8/1 | | A/B/A =1/8/1 | | A/B/A =1/8/1 | | A only | | B only |
| Tg of layer B (°C) | | 57 | | 97 | | 91 | | 70* | | 70 |
| Stretching temperature (°C) | | 74 | | 107 | | 101 | | 80 | | 80 |
| Tensile modulus (MPa) | | 190 | | 850 | | 980 | | 1400 | | 420 |
| Heat shrinkage (%) | | 32 | | 4 | | 8 | | 26 | | 24 |
| Natural shrinkage (%) | | 4.0 | | 0.6 | | 0.8 | | 1.4 | | 1.3 |
| Heat insulating properties | | ○ | | ○ | | ○ | | × | | ○ |
| Printability | | ○ | | ○ | | ○ | | ○ | | × |
| * Tg of layer A | | | | | | | | | | |

EXAMPLE 2

REFERENCE EXAMPLES 1 to 6

In these Reference Examples, a cyclohexane solvent was used, and using n-butyl lithium as an initiator and tetrahydrofuran as a randomization agent, styrene and butadiene were copolymerized to produce block copolymers having characteristics as shown in Table 2-1.

REFERENCE EXAMPLE 1

(1) In a reactor, 490 kg of cyclohexane as a polymerization solvent and 2.1 kg of styrene monomer were charged and maintained at 30°C.

(2) 1,830 ml of a cyclohexane solution containing 10 mass% of n-butyl lithium was added as a polymerization catalyst solution thereto, whereby the styrene monomer was subjected to anion polymerization. Further, in all of the polymerization catalyst solutions in the subsequent Examples and Comparative Examples, a cyclohexane solution containing 10 mass% of n-butyl lithium was employed.

(3) After the styrene monomer was completely consumed, while the internal temperature of the reaction system is maintained at 80°C, styrene monomer in a total amount of 111.5 kg and butadiene in a total amount of 14.1 kg, were simultaneously added at constant rates of 74.3 kg/hr and 9.4 kg/hr, respectively, and after completion of the addition, the system was maintained as it was, for five minutes.

(4) After butadiene gas was completely consumed, while the internal temperature of the reaction system was maintained at 75°C, 37.0 kg of butadiene was added all at once and reacted.

(5) Further, 37.8 kg of styrene monomer was added all at once, and the polymerization was completed.

(6) All polymerization active terminals were deactivated by water to obtain a polymer solution containing a polymer having polystyrene blocks, polybutadiene blocks and random structural portions of styrene and butadiene.

REFERENCE EXAMPLE 2

(1) Into a reactor, 490 kg of cyclohexane as a polymerization solvent and 8.4 kg of styrene monomer were charged and maintained at 30°C.

(2) 1,240 ml of the polymerization catalyst solution was added thereto, and the styrene monomer was subjected to anion polymerization.

(3) After the styrene monomer was completely consumed, while the internal temperature of the reaction system was maintained at 80°C, styrene monomer in a total amount of 115.5 kg and butadiene in a total amount of 14.1 kg were simultaneously added at constant rates of 77.0 kg/hr and 9.4 kg/hr, respectively, and after completion of the addition, the system was maintained as it was, for five minutes.

(4) After butadiene gas was completely consumed, while the internal temperature of the reaction system was maintained at 75°C, 19.5 kg of butadiene was added all at once and reacted.

(5) Further, 52.5 kg of styrene monomer was added all at once, and the polymerization was completed.

(6) All polymerization active terminals were deactivated by water to obtain a polymer solution containing a polymer having polystyrene blocks, polybutadiene blocks and random structural portions of styrene and butadiene.

REFERENCE EXAMPLE 3

(1) In a reactor, 245 kg of cyclohexane as a polymerization solvent and 4.2 kg of styrene monomer were charged and maintained at 30°C.

(2) 980 ml of the polymerization catalyst solution was added thereto, and the styrene monomer was subjected to anion polymerization.

(3) After the styrene monomer was completely consumed, while the internal temperature of the reaction system was maintained at 80°C, styrene monomer in a total amount of 65.1 kg and butadiene in a total amount of 5.8 kg were simultaneously added at constant rates of 43.4 kg/hr and 3.85 kg/hr, respectively, and after completion of the addition, the system was maintained as it was, for five minutes.

(4) After butadiene gas was completely consumed, while the internal temperature of the reaction system was maintained at 60°C, 25.8 kg of butadiene was added all at once and reacted.

(5) Further, 4.2 kg of styrene monomer was added all at once, and the polymerization was completed.

(6) All polymerization active terminals were deactivated by water to obtain a polymer solution containing a polymer having polystyrene blocks, polybutadiene blocks and random structural portions of styrene and butadiene.

REFERENCE EXAMPLE 4

(1) In a reactor, 490 kg of cyclohexane as a polymerization solvent and 69.9 kg of styrene monomer were charged and maintained at 30°C.

(2) 1,670 ml of the polymerization catalyst solution was added thereto, and the styrene monomer was subjected to anion polymerization.

(3) After the styrene monomer was completely consumed, while the internal temperature of the reaction system was maintained at 45°C, 98.1 kg of styrene monomer and 42.0 kg of butadiene were added all at once and reacted.

(4) All polymerization active terminals were deactivated by water to obtain a polymer solution containing a polymer having polystyrene blocks and tapering structural portions of styrene and butadiene.

REFERENCE EXAMPLE 5

(1) In a reactor, 490 kg of cyclohexane as a polymerization solvent and 79.8 kg of styrene monomer were charged and maintained at 30°C.

(2) 1,960 ml of the polymerization catalyst solution was added thereto, and the styrene monomer was subjected to anion polymerization.

(3) After the styrene monomer was completely consumed, while the internal temperature of the reaction system was maintained at 50°C, 50.4 kg of butadiene was added all at once and reacted.

(4) When butadiene gas was completely consumed, while the internal temperature of the reaction system was maintained at 60°C, 79.8 kg of styrene monomer was added all at once, and the polymerization was completed.

(5) All polymerization active terminals were deactivated by water to obtain a polymer solution containing a polymer having polystyrene blocks and polybutadiene blocks.

REFERENCE EXAMPLE 6

(1) In a reactor, 490 kg of cyclohexane as a polymerization solvent and 2.1 kg of styrene monomer were charged and maintained at 30°C.
(2) 1,820 ml of the polymerization catalyst solution was added thereto, and the styrene monomer was subjected to anion polymerization.
(3) After the styrene monomer was completely consumed, while the internal temperature of the reaction system was maintained at 80°C, styrene monomer in a total amount of 126.0 kg and butadiene in a total amount of 10.5 kg were simultaneously added at constant rates of 252.0 kg/hr and 21.0 kg/hr, respectively, and after the addition, the system was maintained as it was for five minutes.
(4) When butadiene gas was completely consumed, while the internal temperature of the reaction system was maintained at 70°C, 33.6 kg of butadiene was added all at once and reacted.
(5) Further, 37.8 kg of styrene monomer was added all at once, and the polymerization was completed.
(6) All polymerization active terminals were deactivated by water to obtain a polymer solution containing a polymer having polystyrene blocks, polybutadiene blocks and random structural portions of styrene and butadiene.

Further, the respective polymers in Reference Examples and Comparative Examples which were in solution states, were, after preliminary concentration of the polymerization solvent, subjected to evaporation treatment by a vented extruder to obtain pellets.

(A) Components used for single layer film

Component (a): Vinyl aromatic hydrocarbon/conjugated diene block copolymers as shown in Table 2-1 were employed.

TABLE 2-1

| Polymer | Amount of butadiene (mass%) | Blend ratio | Mass ratio of a group of polystyrene blocks having Mw of less than 5,000 to a group having Mw of at least 5,000 | Notes |
|---|---|---|---|---|
| a1 | 24.7 | - | 2.24 | Ref. Ex. 1 |
| a2 | 17.0 | 2 | 3.03 | Ref. Ex. 2 |
| a3 | 28.7 | 1 | | Ref. Ex. 3 |
| a4 | 20.5 | - | 0.66 | Ref. Ex. 4 |
| a5 | 23.4 | - | 0 | Ref. Ex. 5 |
| a6 | 20.1 | - | 1.25 | Ref. Ex. 6 |

Component (b): Vinyl aromatic hydrocarbon polymers as shown in Table 2-2 were employed.

TABLE 2-2

| Polymer | Polymer structure | Proportions of monomer units (mass%) | |
|---|---|---|---|
| b1 | Polystyrene | Styrene | 100 |
| b2 | Styrene/methacrylic acid copolymer | Methacrylic acid | 10 |
| | | Styrene | 90 |
| b3 | Styrene/n-butyl acrylate copolymer | n-Butyl acrylate | 20 |
| | | Styrene | 80 |
| b4 | Styrene/methyl methacrylate copolymer | Methyl methacrylate | 22 |
| | | Styrene | 78 |
| b5 | High impact polystyrene | Butadiene | 6 |
| | | Styrene | 94 |

(B) Preparation of film

Using the vinyl aromatic hydrocarbon/conjugated diene block copolymer (a) shown in Table 2-1 and the vinyl aromatic hydrocarbon polymer (b) shown in Table 2-2, a heat shrinkable foamed film was prepared in the blend amounts (parts by mass) of the raw material polymers shown in Table 2-4 or 2-5. With respect to Examples 2-1 to 2-6 and Comparative Examples 2-1 to 2-3, 1.5 phr of a chemical foaming agent (Hydrocerol CF-40S: manufactured by Clariant) was added as a foaming agent to the polymer for polymer composition comprising components (a) and (b). With respect to Comparative Example 2-4, no chemical foaming agent was added.

For a film, firstly, the polymer or polymer composition was melted by an extruder and formed into a sheet having a thickness of 0.4 mm. Then, using a biaxial stretching device manufactured by Toyo Seiki Seisaku-sho, Ltd., it was transversely monoaxially stretched four times at a stretching temperature shown in Table 2-4 or 2-5 to obtain a stretched film.

Further, as Example 2-7, a heat shrinkable foamed film was prepared by laminating a heat shrinkable film made of a styrene/butadiene block copolymer (SBS) (thickness: 40 $\mu$m, heat shrinkage: 22% at 70°C $\times$ 10 seconds, natural shrinkage: 1.2% at 40°C $\times$ 7 days) on a non-stretched film (thickness: 150 $\mu$m) prepared in the same manner as the sheet in Example 2-1. Further, as Example 2-8, a heat shrinkable foamed film was prepared by laminating the above heat shrinkable film made of SBS on the stretched film in Example 2-1.

Further, as Example 2-9, a heat shrinkable foamed film was prepared by laminating a heat shrinkable film of polyethylene terephthalate (PET) (thickness: 40 $\mu$m, heat shrinkage: 24% at 70°C $\times$ 10 seconds, natural shrinkage: 1.0% at 40°C $\times$ 7 days) to a non-stretched film (thickness: 150 $\mu$m) prepared in the same manner as the sheet in Example 2-3. Further, as Example 2-10, a heat shrinkable foamed film was prepared by laminating the above heat shrinkable film of PET on the stretched film in Example 2-3.

In Tables 2-4 and 2-5, the physical properties are shown together with the blend amounts (parts by mass) of the raw material polymers.

(C) Components used for multilayer film

Component (a): Vinyl aromatic hydrocarbon/conjugated diene block copolymers shown in Table 2-1 were employed.

Component (b): Vinyl aromatic hydrocarbon polymers as shown in Table 2-2 were employed.

Component (c): Vinyl aromatic hydrocarbon polymers as shown in Table 2-3 were employed.

TABLE 2-3

| Polymer | Polymer structure | Proportions of monomer units (mass%) | |
|---|---|---|---|
| c1 | Styrene/butadiene block copolymer | Butadiene | 22 |
| | | Styrene | 78 |
| c2 | Polystyrene | Styrene | 100 |
| c3 | Styrene/n-butyl acrylate copolymer | n-Butyl acrylate | 17 |
| | | Styrene | 83 |
| c4 | Styrene/methyl methacrylate copolymer | Methyl methacrylate | 12 |
| | | Styrene | 88 |
| c5 | High impact polystyrene | Butadiene | 7 |
| | | Styrene | 93 |
| c6 | Styrene/methacrylic acid copolymer | Methacrylic acid | 7 |
| | | Styrene | 93 |

(B') Preparation of film

Using the vinyl aromatic hydrocarbon/conjugated diene block copolymer (a) shown in Table 2-1, the vinyl aromatic hydrocarbon polymer (b) shown in Table 2-2 and the vinyl aromatic hydrocarbon polymer (c) shown in Table 2-3, a heat shrinkable multilayer film was prepared in the blend amounts (parts by mass) of the raw material polymers of the respective layers, and the layer ratios (%) shown in Table 2-6 or 2-7. With respect to Examples 2-11 to 2-16 and Comparative Examples 2-5 to 2-7, 1.5 phr of a chemical foaming agent (Hydrocerol CF-40S: manufactured by Clariant) was added as a foaming agent to the polymer or polymer composition comprising components (a) and (b). With respect to Comparative Example 2-8, no chemical foaming agent was added.

For a film, firstly polymers or polymer compositions corresponding to the respective layers were melted in separate extruders and multi-layered in a T-die to form a foamed sheet having a thickness of 0.4 mm. Then, by means of a biaxial stretching apparatus manufactured by Toyo Seiki Seisaku-sho, Ltd., it was transversely monoaxially stretched four times at a stretching temperature shown in Table 2-6 or 2-7 to obtain a stretched film.

Further, as Example 2-17, a heat shrinkable foamed film was prepared by laminating the above mentioned heat shrinkable film made of SBS on a non-stretched film (thickness: 150 μm) prepared in the same manner as the sheet in Example 2-11. Further, as Example 2-18, a heat shrinkable foamed film was prepared by laminating the above heat shrinkable film made of SBS to the stretched film in Example 2-11.

Further, as Example 2-19, a heat shrinkable foamed film was prepared by laminating the above heat shrinkable film made pf PET to a non-stretched film (thickness: 150 μm) prepared in the same manner as the sheet in Example 2-13. Further, as Example 2-20, a heat shrinkable foamed film was prepared by laminating the above heat shrinkable film made of PET to the stretched film in Example 2-13.

In Tables 2-6 and 2-7, the physical properties are shown together with the blend amounts (parts by mass) of the raw material polymers for the respective layers and the layer ratios (%) in Tables 2-6 and 2-7.

Further, in Examples, the respective physical properties of the films were measured by the following methods.

(1) Ozone decomposition and measurement of the molecular weight

The weight average molecular weight of a group of vinyl aromatic hydrocarbon polymer blocks incorporated in the block copolymer, was obtained by measuring the vinyl aromatic hydrocarbon polymer components obtained by ozone decomposition of the block copolymer (Y. TANAKA, et. al., RUBBERCHEMISTRY AND TECHNOLOGY, 58, p. 16 (1985)), under the following GPC conditions.

Name of apparatus: SYSTEM-21 Shodex (manufactured by Showa Denko K.K.)

Column: Three columns of PL gel MIXED-B were connected in series.

Temperature: 40°C
Detection: Differential refractive index
Solvent: Tetrahydrofuran
Concentration: 2 mass%

Calibration curve: Prepared by using standard polystyrene (PS) (manufactured by PL Company), and the molecular weight is represented by a value calculated as PS.

(2) Measurement of the mass fraction of butadiene contained in block copolymer

0.1 g of the above pellets were dissolved in about 50 ml of chloroform, and 25 ml of an iodine monochloride carbon tetrachloride solution was added thereto, and the mixture was left to stand in a dark place for one hour. Then, 75 ml of a 2.5% potassium iodide solution was further added. At that time, excess iodine monochloride was titrated with a 20% alcoholic N/10 sodium thiosulfate solution, and the amount of iodine consumed in the addition reaction to the double bond of polybutadiene was calculated back, and the butadiene concentration was obtained.

From the results in Tables 2-4 to 2-7, it is evident that the heat shrinkable films of the present invention are excellent in heat shrinkability, anti-natural shrinkage and heat-insulating properties.

TABLE 2-5

| | | Comparative Examples | | | | | | | |
|---|---|---|---|---|---|---|---|---|---|
| | | 2-1 | | 2-2 | | 2-3 | | 2-4* | |
| Foamed layer | Blend amounts (parts by mass) | a4 | 100 | a5 | 100 | a6 | 100 | a1 | 100 |
| Tg of foamed layer (°C) | | 73 | | 106 | | 77 | | 66 | |
| Stretching temperature (°C) | | 88 | | 120 | | 92 | | 81 | |
| Foaming ratio of film (times) | | 2.5 | | 2.3 | | 2.4 | | 1.0 | |
| Heat shrinkage (%) | | 19 | | 3 | | 18 | | 27 | |

(continued)

| | Comparative Examples | | | |
|---|---|---|---|---|
| | 2-1 | 2-2 | 2-3 | 2-4* |
| Natural shrinkage (%) | 5.1 | 0.2 | 5.5 | 1.8 |
| Heat insulating property | ○ | ○ | ○ | × |
| *: a1 is non-foamed | | | | |

TABLE 2 - 7

| | | Comparative Examples | | | | | | | |
|---|---|---|---|---|---|---|---|---|---|
| | | 2-5 | | 2-6 | | 2-7 | | 2-8* | |
| Non-foamed layer (layer A) | Blend amount (parts by mass) | c1 | 100 | c1 | 100 | c1 | 100 | c1 | 100 |
| | | c5 | 1.0 | c5 | 1.0 | c5 | 1.0 | c5 | 1.0 |
| Foamed layer (layer B) | Blend amount (parts by mass) | a4 | 100 | a5 | 100 | a6 | 100 | a1 | 100 |
| Layer ratio | | A/B/A =1/8/1 | | A/B/A =1/8/1 | | A/B/A =1/8/1 | | A/B/A =1/8/1 | |
| Tg of foamed layer (°C) | | 73 | | 106 | | 77 | | 66 | |
| Stretching temperature (°C) | | 90 | | 120 | | 94 | | 81 | |
| Foaming ratio of film (times) | | 2.0 | | 1.8 | | 2.0 | | 1.0 | |
| Heat shrinkage (%) | | 14 | | 4 | | 17 | | 25 | |
| Natural shrinkage (%) | | 4.2 | | 0.2 | | 4.9 | | 1.6 | |
| Heat insulating property | | ○ | | ○ | | ○ | | × | |
| *: a1 is non-foamed | | | | | | | | | |

TABLE 2-4

| | | Examples | | | | | | | | | | | | | | | | | | |
|---|---|---|---|---|---|---|---|---|---|---|---|---|---|---|---|---|---|---|---|---|
| | | 2-1 | | 2-2 | | 2-3 | | 2-4 | | 2-5 | | 2-6 | | 2 -7*1 | | 2-8*1 | | 2-9*2 | | 2-10*2 |
| Foamed layer | Blend amount (parts by mass) | a1 | 100 | a2 | 67 | a1 | 85 | a1 | 80 | a2 | 33 | a1 | 75 | a1 | 100 | a1 | 100 | a1 | 85 | a1 | 85 |
| | | | | a3 | 33 | b2 | 5 | b1 | 10 | a3 | 17 | b4 | 25 | | | | | b2 | 5 | b2 | 5 |
| | | | | | | b4 | 10 | b5 | 10 | b3 | 50 | | | | | | | b4 | 10 | b4 | 10 |
| Tg of foamed layer (°C) | | 66 | | 69 | | 71 | | 73 | | 68 | | 75 | | 66 | | 66 | | 71 | | 71 |
| Stretching temperature (°C) | | 81 | | 84 | | 83 | | 82 | | 83 | | 90 | | - | | 81 | | - | | 83 |
| Foaming ratio of film (times) | | 2.4 | | 2.6 | | 2.5 | | 2.6 | | 2.8 | | 2.6 | | 1.7 | | 2.4 | | 1.7 | | 2.5 |
| Heat shrinkage (%) | | 30 | | 25 | | 24 | | 24 | | 28 | | 17 | | 16 | | 24 | | 17 | | 24 |
| Natural shrinkage (%) | | 2.2 | | 1.7 | | 1.5 | | 1.6 | | 2.0 | | 1.2 | | 0.7 | | 1.5 | | 0.5 | | 1.2 |
| Heat insulating property | | ○ | | ○ | | ○ | | ○ | | ○ | | ○ | | ○ | | ○ | | ○ | | ○ |

*1: A heat shrinkable film made of SBS was laminated, and the foaming ratio is the value other than the laminated film.
*2: A heat shrinkable film made of PET was laminated, and the foaming ratio is the value other than the laminated film.

TABLE 2-6

| | | 2-11 | | 2-12 | | 2-13 | | 2-14 | | 2-15 | | 2-16 | | 2-17*1 | | 2-18*1 | | 2-19*2 | | 2-20*2 | |
|---|---|---|---|---|---|---|---|---|---|---|---|---|---|---|---|---|---|---|---|---|---|
| | | | | | | | | | | Examples | | | | | | | | | | | |
| Non-foamed layer (layer A) | Blend amount (parts by mass) | c1 | 100 | c1 | 90 | c1 | 55 | c3 | 100 | c1 | 85 | c1 | 90 | c1 | 100 | c1 | 100 | c1 | 55 | c1 | 55 |
| | | c5 | 1.0 | c2 | 10 | c3 | 45 | c5 | 1.2 | c4 | 15 | c6 | 10 | c5 | 1.0 | c5 | 1.0 | c3 | 45 | c3 | 45 |
| | | | | c5 | 1.5 | c5 | 1.0 | | | c5 | 1.8 | c5 | 2.0 | | | | | c5 | 1.0 | c5 | 1.0 |
| Foamed layer (layer B) | Blend amount (parts by mass) | a1 | 100 | a2 | 67 | a1 | 85 | a1 | 80 | a2 | 33 | a1 | 75 | a1 | 100 | a1 | 100 | a1 | 85 | a1 | 85 |
| | | | | a3 | 33 | b2 | 5 | b1 | 10 | a3 | 17 | b4 | 25 | | | | | b2 | 5 | b2 | 5 |
| | | | | | | b4 | 10 | b5 | 10 | b3 | 50 | | | | | | | b4 | 10 | b4 | 10 |
| Layer ratio | | A/B/A =1/8/1 | | A/B/A =1/8/1 | | A/B/A =1/8/1 | | A/B/A =1/8/1 | | A/B/A =2/6/2 | | A/B/A =2/6/2 | | A/B/A =1/8/1 | | A/B/A =1/8/1 | | A/B/A =1/8/1 | | A/B/A =1/8/1 | |
| Tg of foamed layer (°C) | | 66 | | 69 | | 71 | | 73 | | 68 | | 75 | | 66 | | 66 | | 71 | | 71 | |
| Stretching temperature (°C) | | 80 | | 84 | | 85 | | 82 | | 83 | | 85 | | - | | 80 | | - | | 85 | |
| Foaming ratio of film (times) | | 1.9 | | 2.1 | | 1.9 | | 2.1 | | 2.3 | | 2.1 | | 1.3 | | 1.9 | | 1.3 | | 1.9 | |
| Heat shrinkage (%) | | 27 | | 24 | | 22 | | 23 | | 26 | | 19 | | 15 | | 23 | | 16 | | 24 | |
| Natural shrinkaqe (%) | | 2.2 | | 1.8 | | 1.3 | | 1.6 | | 2.0 | | 1.3 | | 0.7 | | 1.5 | | 0.5 | | 1.1 | |
| Heat insulating property | | ○ | | ○ | | ○ | | ○ | | ○ | | ○ | | ○ | | ○ | | ○ | | ○ | |

*1: A heat shrinkable film made of SBS was laminated, and the foaming ratio is the value other than the laminated film.
*2: A heat shrinkable film made of PET was laminated, and the foaming ratio is the value other than the laminated film.

EXAMPLE 3

PREPARATION OF BLOCK COPOLYMER COMPOSITION (SBS-1)

(1) In a reactor, 490 kg of cyclohexane, 70 kg of styrene monomer and 75 g of tetrahydrofuran were charged and maintained at 30°C.

(2) 1,400 ml of a cyclohexane solution containing 10 mass% of n-butyl lithium was added as a polymerization catalyst solution thereto, and the styrene monomer was subjected to anion polymerization.

(3) After the styrene monomer was completely consumed, while the internal temperature of the reaction system was maintained at 40°C, 25 kg of butadiene was added and reacted.

(4) After butadiene gas was completely consumed, while the internal temperature of the reaction system was maintained at 40°C, 6 kg of butadiene and 105 kg of styrene were added all at once and reacted. Finally, polymerization active terminals were deactivated by water to obtain a polymer solution a containing a block copolymer having a styrene block structure, a butadiene block structure and a tapering structure of styrene and butadiene.

(5) In a reactor, 245 kg of cyclohexane, 23 kg of styrene monomer and 38 g of tetrahydrofuran were charged and maintained at 30°C.

(6) 2,000 ml of a cyclohexane solution containing 10 mass% of n-butyl lithium was added as a polymerization catalyst solution thereto, and the styrene monomer was subjected to anion polymerization.

(7) After the styrene monomer was completely consumed, while the internal temperature of the reaction system was maintained at 40°C, 48 kg of butadiene and 35 kg of styrene were added all at once and reacted. Finally, polymerization active terminals were deactivated by water to obtain a polymer solution b containing a block copolymer having a styrene block structure and a tapering structure of styrene and butadiene.

(8) 50 parts by mass of the polymer solution b was mixed to 100 parts by mass of the above polymer solution a, followed by vaporization to obtain the desired composition SBS-1.

PREPARATION OF BLOCK POLYMER COMPOSITION (SBS-2)

(1) In a reactor, 490 kg of cyclohexane and 8 kg of styrene monomer were charged and maintained at 30°C.

(2) 1,300 ml of a cyclohexane solution containing 10 mass% of n-butyl lithium was added as a polymerization catalyst solution thereto, and the styrene monomer was subjected to anion polymerization.

(3) After the styrene monomer was completely consumed, while the internal temperature of the reaction system was maintained at 80°C, 20 kg of butadiene was added all at once and reacted.

(4) After butadiene gas was completely consumed, while the internal temperature of the reaction system was maintained at 80°C, styrene monomer in a total amount of 116 kg and butadiene in a total amount of 14 kg were simultaneously added at constant rates of 77 kg/hr and 9 kg/hr, respectively, and after completion of the addition, the system was maintained as it was for 5 minutes.

(5) Further, 53 kg of styrene monomer was added all at once, and the polymerization was completed.

(6) Finally, all polymerization active terminals were deactivated by water to obtain a polymer solution containing a polymer having polystyrene blocks, polybutadiene blocks and random structure portions of styrene and butadiene, and this solution was designated as a polymer solution e.

(7) A polymer solution f was obtained by carrying out the same operation as for the polymer solution a by adjusting the amount of the polymerization catalyst solution to 2,400 ml, the amount of butadiene added all at once to 64 kg, and the amount of styrene monomer finally added to 8 kg.

(8) 50 parts by mass of the polymer solution f was mixed to 100 parts by mass of the above polymer solution e, followed by evaporation to obtain the desired composition SBS-2.

With respect to the elongation viscosity, by means of Meissner model Melten Rheometer manufactured by Toyo Seiki Seisaku-sho, Ltd., a constant strain rate elongation measurement was carried out at 120°C at a strain rate of 0.1/sec, and further, the elongation viscosities at Hencky strain 1.0 and 1.5 were obtained, and their ratio was taken. The results are shown in Table 3-3.

PREPARATION OF SINGLE LAYER FILM (Examples 3-1 to 3-7 and Comparative Examples 3-1 to 3-6)

Using the vinyl aromatic hydrocarbon/conjugated diene block copolymer shown in Table 3-1 and the vinyl aromatic hydrocarbon polymer shown in Table 3-2, a film was prepared in the blend amounts (parts by mass) shown in Table 3-3 by a T-die system 65 m/m single screw sheet extruder at a T-die temperature set at 180°C. Further, as a foaming agent, a chemical foaming agent (Hydrocerol CF-40S: manufactured by Clariant) was added. Here, the amount added was 2 phr in all cases except for 1 phr in Comparative Example 3-3 and 3 phr in Comparative Example 3-4. With respect to the film forming property, ○ indicates a case where a film was formed satisfactorily, and × indicates a case where a film was not formed satisfactorily.

MEASUREMENT OF SPECIFIC GRAVITY

The specific gravity of a film was measured by an electron specific gravity meter MD200S, manufactured by Alfa Mirage Co., Ltd.

PREPARATION OF LABEL

The obtained film was slit, and a heat shrinkable polyester film having a thickness of 30 $\mu$m and having a heat shrinkage of 30% at 80°C × 10 seconds, was dry-laminated by an adhesive, and the film edges were solvent-sealed having the shrinkage direction adjusted to be the circumferential direction, to obtain a heat shrinkable label.

PREPARATION OF FILM-COVERED CONTAINER

This heat shrinkable label was wound on an aluminum bottle can (provided with a cap) having a cylindrical portion with a diameter of 66 mm and heated at 80°C for 10 seconds to obtain a film-covered container. Further, with respect to the shrink finishing of the coated container, × indicates a case where creases formed, and ○ indicates a case where good finishing was attained.

EVALUATION OF HEAT INSULTING PROPERTIES

In the film-covered container, hot water of 65°C was put, and the film portion of the container was held by a hand, and ○ indicates a case where the time until the container can no longer be held is at least 10 seconds, and × indicates a case where such a time is less than.10 seconds. The blend proportions of the materials and the results are shown in Table 3-3.

PREPARATION OF MULTILAYER FILM (Example 3-8 to 3-10, and Comparative Examples 3-7 to 3-9)

In each Example, using a foamed layer as the center layer and a non-foamed layer of the same blend composition as each surface layer, a multilayer film was formed by co-extrusion in a layer ratio of front layer/center layer/rear layer = 1/8/1, and a heat shrinkable polyester film having a thickness of 30 $\mu$m was dry-laminated in the same manner as described above. The same evaluation as in Examples 3-1 to 3-7 was carried out. The blend ratios of the materials and the results are shown in Table 3-4.

PREPARATION OF HEAT SHRINKABLE FILM (Example 3-11 to 3-19, and Comparative Examples 3-10 to 3- 11)

A single layer film and a multilayer film having a foamed layer as the center layer and non-foamed layer of the same blend composition as each surface layer, were stretched three times in the transverse direction at a stretching temperature of 95°C by a tenter, and the evaluation was carried out in the same manner as in Examples 3-1 to 3-7. The blend ratios of the materials and the results are shown in Table 3-5.

INDUSTRIAL APPLICABILITY

The styrene type foamed film of the present invention is excellent in impact strength, rigidity, heat shrinkability and heat insulating properties and has a good finishing property upon heat shrinkage, and it is very useful as a heat shrinkable label to cover various containers, a heat shrinkable cap seal, a packaging film, etc.

TABLE 3-1

| Block copolymer | |
| --- | --- |
| Name | Rubber content |
| SBS1 | 25 |
| SBS2 | 22 |
| SBS3 | 60 |
| * As SBS-3, STR1250 manufactured by Denki Kagaku Kogyo Kabushiki kaisha was used. | |

TABLE 3-2

| Styrene type resin | |
| --- | --- |
| | Name |
| PS-1 | GPPS |
| PS-2 | HIPS |
| PS-3 | High molecular weight PS |
| PS-4 | MS |
| PS-5 | St-MAA |
| As PS-1, HRM12 manufactured by TOYO STYRENE CO., LTD. was used. As PS-2, H380 manufactured by TOYO STYRENE CO., LTD. was used. As PS-3, BLENDEX 865 manufactured by GE Specialty Chemicals, Inc. was used. As PS-4, MS200 manufactured by Nippon Steel Chemical Co., Ltd. was used. AS PS-5, TF2 manufactured by TOYO STYRENE CO., LTD. was used. | |

TABLE 3-3

| No | Blend ratios of materials | | | | Elongation viscosity characteristics $\eta\ 1.5/\eta\ 1.0$ | Film thickness ($\mu$) | Specific gravity |
|---|---|---|---|---|---|---|---|
| | Block copolymer | | Styrene-type resin | | | | |
| | Name | Blend amount | Name | Blend amount | | | |
| Ex. 3-1 | SBS-1 | 50 | PS-1 | 50 | 2.02 | 100 | 0.45 |
| Ex. 3-2 | SBS-1 | 100 | | | 1.79 | 100 | 0.63 |
| Ex. 3-3 | SBS-1 | 60 | PS-2 | 40 | 1.95 | 100 | 0.68 |
| Ex. 3-4 | SBS-1 | 60 | PS-4 | 40 | 2.02 | 100 | 0.72 |
| Ex. 3-5 | SBS-1 | 60 | PS-5 | 40 | 2.02 | 100 | 0.75 |
| Ex. 3-6 | SBS-2 | 100 | | | 1.05 | 100 | 0.65 |
| Ex. 3-7 | SBS-2 | 90 | PS-3 | 10 | 2.62 | 100 | 0.8 |
| Comp. Ex. 3-1 | SBS-1 | 50 | PS-1 | 50 | 2.02 | 500 | 0.45 |
| Comp. Ex. 3-2 | SBS-1 | 50 | PS-1 | 50 | 2.02 | 20 | 0.45 |
| Comp. Ex. 3-3 | SBS-1 | 50 | PS-1 | 50 | 2.02 | 100 | 0.92 |
| Comp. Ex. 3-4 | SBS-1 | 50 | PS-1 | 50 | 2.02 | 100 | 0.21 |
| Comp. Ex. 3-5 | SBS-1 | 10 | PS-1 | 90 | 2.15 | 100 | 0.5 |
| Comp. Ex. 3-6 | SBS-3 | 10 | PS-1 | 90 | 2.13 | 100 | 0.55 |

TABLE 3-3 (Continued)

| No | Evaluation results | | | Notes |
|---|---|---|---|---|
| | Film forming properties | Finishing | Heat insulating properties | |
| Ex. 3-1 | ○ | ○ | ○ | |
| Ex. 3-2 | ○ | ○ | ○ | |
| Ex. 3-3 | ○ | ○ | ○ | |
| Ex. 3-4 | ○ | ○ | ○ | |
| Ex. 3-5 | ○ | ○ | ○ | |
| Ex. 3-6 | Δ | Δ | - | Many foams ruptured |
| Ex. 3-7 | Δ | - | - | Difficult to form into a film |
| Comp. Ex. 3-1 | ○ | X | ○ | Creases observed |
| Comp. Ex. 3-2 | X | - | - | Impossible to form into a film |
| Comp. Ex. 3-3 | ○ | ○ | X | Poor in heat insulating properties |
| Comp. Ex. 3-4 | X | - | - | Impossible to form into a film |
| Comp. Ex. 3-5 | X | - | - | Impossible to form into a film |
| Comp. Ex. 3-6 | X | - | - | Impossible to form into a film |

EP 1 645 588 B1

TABLE 3-4

| No | Layer structure | Blend ratios of materials | | | | Elongation viscosity characteristics $\eta\ 1.5/\eta\ 1.0$ | Film thickness ($\mu$) | Specific gravity |
|---|---|---|---|---|---|---|---|---|
| | | Block copolymer | | Styrene-type resin | | | | |
| | | Name | Blend amount | Name | Blend amount | | | |
| Ex. 3-8 | 1/8/1 | SBS-1 | 50 | PS-1 | 50 | 2.02 | 100 | 0.56 |
| Ex. 3-9 | 1/8/1 | SBS-1 | 100 | | | 1.79 | 100 | 0.79 |
| Ex. 3-10 | 1/8/1 | SBS-2 | 90 | PS-3 | 10 | 2.62 | 100 | 0.83 |
| Comp. Ex. 3-7 | 1/8/1 | SBS-1 | 50 | PS-1 | 50 | 2.02 | 500 | 0.56 |
| Comp. Ex. 3-8 | 1/8/1 | SBS-1 | 50 | PS-1 | 50 | 2.02 | 20 | 0.55 |
| Comp. Ex. 3-9 | 1/8/1 | SBS-1 | 50 | PS-1 | 50 | 2.02 | 100 | 0.28 |

TABLE 3-4 (Continued)

| No | Layer structure | Evaluation results | | | Notes |
|---|---|---|---|---|---|
| | | Film forming properties | Finishing | Heat insulating properties | |
| Ex. 3-8 | 1/8/1 | ○ | ○ | ○ | |
| Ex. 3-9 | 1/8/1 | ○ | ○ | ○ | |
| Ex. 3-10 | 1/8/1 | Δ | - | - | Impossible to form into a film |
| Comp. Ex. 3-7 | 1/8/1 | ○ | × | ○ | Creases observed |
| Comp. Ex. 3-8 | 1/8/1 | ○ | ○ | × | Poor in heat insulating properties |
| Comp. Ex. 3-9 | 1/8/1 | × | - | - | Many foams ruptured |

EP 1 645 588 B1

TABLE 3-5

| No | Layer structure | Blend ratios of materials | | | | Elongation viscosity characteristics $\eta\ 1.5/\eta\ 1.0$ | Film thickness ($\mu$) | Specific gravity |
|---|---|---|---|---|---|---|---|---|
| | | Block copolymer | | Styrene-type resin | | | | |
| | | Name | Blend amount | Name | Blend amount | | | |
| Ex. 3-11 | Single layer | SBS-1 | 50 | PS-1 | 50 | 2.02 | 100 | 0.41 |
| Ex. 3-12 | Single layer | SBS-1 | 100 | | | 1.79 | 100 | 0.57 |
| Ex. 3-13 | Single layer | SBS-1 | 60 | PS-2 | 40 | 1.95 | 100 | 0.59 |
| Ex. 3-14 | Single layer | SBS-1 | 60 | PS-4 | 40 | 2.02 | 100 | 0.68 |
| Ex. 3-15 | Single layer | SBS-1 | 60 | PS-5 | 40 | 2.02 | 100 | 0.67 |
| Ex. 3-16 | 1/8/1 | SBS-1 | 50 | PS-1 | 50 | 2.02 | 100 | 0.51 |
| Ex. 3-17 | 1/8/1 | SBS-1 | 100 | | | 1.79 | 100 | 0.72 |
| Ex. 3-18 | Single layer | SBS-2 | 100 | | | 1.05 | 100 | 0.58 |
| Ex. 3-19 | 1/8/1 | SBS-2 | 100 | | | 1.05 | 100 | 0.65 |
| Comp. Ex. 3-10 | Single layer | SBS-3 | 10 | PS-1 | 90 | 2.13 | 100 | 0.5 |
| Comp. Ex. 3-11 | 1/8/1 | SBS-1 | 50 | PS-1 | 50 | 2.02 | 20 | 0.45 |

EP 1 645 588 B1

TABLE 3-5 (Continued)

| No | Evaluation results | | | Notes |
|---|---|---|---|---|
| | Film forming properties | Finishing | Heat insulating properties | |
| Ex. 3-11 | ○ | ○ | ○ | |
| Ex. 3-12 | ○ | ○ | ○ | |
| Ex. 3-13 | ○ | ○ | ○ | |
| Ex. 3-14 | ○ | ○ | ○ | |
| Ex. 3-15 | ○ | ○ | ○ | |
| Ex. 3-16 | ○ | ○ | ○ | |
| Ex. 3-17 | ○ | ○ | ○ | |
| Ex. 3-18 | Δ | Δ | - | Many foams ruptured |
| Ex. 3-19 | Δ | Δ | - | Many foams ruptured |
| Comp. Ex. 3-10 | × | - | - | Impossible to stretch |
| Comp. Ex. 3-11 | ○ | ○ | × | Poor in heat insulating properties |

EP 1 645 588 B1

**Claims**

1. A foamed film **characterized by** having at least one foamed layer which contains a resin composition comprising from 20 to 100 parts by mass of the following (a) and from 0 to 80 parts by mass of the following (b) and which has a thickness of from 30 to 200 $\mu$m and a specific gravity of from 0.3 to 0.9:

   (a) a block copolymer wherein the ratio of a vinyl aromatic hydrocarbon to a conjugated diene is from 50/50 to 90/10,
   (b) at least one vinyl aromatic hydrocarbon polymer selected from the following (i) to (v):

   (i) a block copolymer of a vinyl aromatic hydrocarbon with a conjugated diene,
   (ii) a vinyl aromatic hydrocarbon polymer,
   (iii) a copolymer of a vinyl aromatic hydrocarbon with (meth)acrylic acid,
   (iv) a copolymer of a vinyl aromatic hydrocarbon with a (meth)acrylate, and
   (v) a rubber-modified styrene polymer.

2. The foamed film according to Claim 1, wherein the uniaxial elongation viscosity $\eta$ at 120°C of the resin composition satisfies the following condition:

$$2.5 > \eta 1.5 / \eta 1 > 1.1$$

   $\eta$1: elongation viscosity at Hencky strain 1
   $\eta$1.5: elongation viscosity at Hencky strain 1.5

3. The foamed film according to Claim 1, wherein the above (a) is a block copolymer of the following (1) and (2) :

   (1) the mass ratio of the vinyl aromatic hydrocarbon to the conjugated diene is from 60/40 to 90/10,
   (2) the mass ratio of a group of vinyl aromatic hydrocarbon polymer blocks having a weight average molecular weight of less than 5,000 to a group of vinyl aromatic hydrocarbon polymer blocks having a weight average molecular weight of at least 5,000, is from 60/40 to 90/10.

4. The foamed film according to any one of Claims 1 to 3, wherein (a) the block copolymer is a styrene/butadiene block copolymer, and (b) the vinyl aromatic hydrocarbon polymer is at least one polymer selected from the group consisting of a polystyrene, a styrene/methacrylic acid copolymer, a styrene/methyl methacrylate copolymer, a styrene/n-butyl acrylate copolymer, a styrene/n-butyl acrylate/methyl methacrylate copolymer and an impact-resistant polystyrene.

5. A foamed multilayer film having at least one foamed layer as defined in any one of Claims 1 to 4 and at least one non-foamed thermoplastic resin layer.

6. The foamed multilayer film according to Claim 5, wherein at least one outer layer in the case of three or more layers, or one layer in the case of two layers, is a layer formed from the following (b') vinyl aromatic hydrocarbon polymer:

   (b') at least one vinyl aromatic hydrocarbon polymer selected from the following (i') to (v'):

   (i') a block copolymer of a vinyl aromatic hydrocarbon with a conjugated diene,
   (ii') a vinyl aromatic hydrocarbon polymer,
   (iii') a copolymer of a vinyl aromatic hydrocarbon with (meth)acrylic acid,
   (iv') a copolymer of a vinyl aromatic hydrocarbon with a (meth)acrylate, and
   (v') a rubber-modified styrene polymer.

7. A heat shrinkable foamed film obtained by stretching the foamed film or the foamed multilayer film as defined in any one of Claims 1 to 6.

8. A heat shrinkable foamed multilayer film having a heat shrinkable film laminated on the foamed film or the foamed multilayer film as defined in any one of Claims 1 to 7.

9. The heat shrinkable foamed multilayer film according to Claim 7 or 8, wherein the heat shrinkage is at least 10% at 70°C in 10 seconds.

10. The heat shrinkable foamed multilayer film according to any one of Claims 7 to 9, wherein the natural shrinkage is at most 2.5% at 40°C for seven days.

11. A heat shrinkable label made of the heat shrinkable foamed multilayer film as defined in any one of Claims 7 to 10

12. A container covered with the heat shrinkable label as defined in Claim 11.


**Patentansprüche**

1. Geschäumter Film, **dadurch gekennzeichnet, dass** er mindestens eine geschäumte Schicht aufweist, die eine Harzzusammensetzung enthält, die von 20 bis 100 Gewichtsteilen des folgenden (a) und von 0 bis 80 Gewichtsteilen der folgenden (b) umfasst, und die eine Dicke von 30 bis 200 $\mu$m und ein spezifisches Gewicht von 0,3 bis 0,9 aufweist:

(a) ein Blockcopolymer, in dem das Verhältnis eines aromatischen Vinylkohlenwasserstoffs zu einem konjugierten Dien von 50/50 bis 90/10 beträgt,
(b) mindestens ein Polymer aus einem aromatischen Vinylkohlenwasserstoff ausgewählt aus den folgenden (i) bis (v):

(i) ein Blockcopolymer aus einem aromatischen Vinylkohlenwasserstoff mit einem konjugierten Dien,
(ii) ein Polymer aus einem aromatischen Vinylkohlenwasserstoff,
(iii) ein Copolymer aus einem aromatischen Vinylkohlenwasserstoff mit (Meth)acrylsäure,
(iv) ein Copolymer aus einem aromatischen Vinylkohlenwasserstoff mit einem (Meth)acrylat, und
(v) einem gummimodifizierten Styrolpolymer.

2. Der geschäumte Film gemäß Anspruch 1, worin die uniaxiale Dehnungsviskosität $\eta$ bei 120°C der Harzzusammensetzung die folgende Bedingung erfüllt:

$$2,5 > \eta 1,5 / \eta 1 > 1,1$$

$\eta 1$: Dehnungsviskosität bei einer Hencky-Dehnung von 1.
$\eta 1,5$: Dehnungsviskosität bei einer Hencky-Dehnung von 1,5.

3. Der geschäumte Film gemäß Anspruch 1, worin obiges (a) ein Blockcopolymer gemäß den folgenden (1) und (2) ist:

(1) das Massenverhältnis des aromatischen Vinylkohlenwasserstoffs zu dem konjugierten Dien beträgt von 60/40 zu 90/10,
(2) das Massenverhältnis einer Gruppe von Polymerblöcken aus dem aromatischen Vinylkohlenwasserstoff mit einem Gewichtsmittel des Molekulargewichts von weniger als 5.000 zu einer Gruppe von Polymerblöcken aus dem aromatischen Vinylkohlenwasserstoff mit einem Gewichtsmittel des Molekulargewichts von mindestens 5.000 beträgt von 60/40 bis 90/10.

4. Der geschäumte Film gemäß einem der Ansprüche 1 bis 3, worin (a) das Blockcopolymer ein Styrol/Butadien-Blockcopolymer ist und (b) das Polymer aus einem aromatischen Vinylkohlenwasserstoff mindestens ein Polymer ist ausgewählt aus der Gruppe bestehend aus einer Polystyrol, einem Styrol/Methacrylsäure-Copolymer, einem Styrol/Methylmethacrylat-Copolymer, einem Styrol/n-Butylacrylat-Copolymer, einem Styrol/n-Butylacrylat/Methylmethacrylat-Copolymer und einem schlagbeständigen Polystyrol.

5. Geschäumter mehrschichtiger Film mit mindestens einer geschäumten Schicht wie in einem der Ansprüche 1 bis 4 definiert und mindestens einer nicht geschäumten thermoplastischen Harzschicht.

6. Der geschäumte mehrschichtige Film gemäß Anspruch 5, worin mindestens eine äußere Schicht im Fall von 3 oder mehr Schichten, oder eine Schicht im Fall von zwei Schichten eine Schicht ist, die aus dem folgenden (b') aromatischen Vinylkohlenwasserstoffpolymer gebildet ist:

(b') mindestens ein Polymer aus einem aromatischen Vinylkohlenwasserstoff ausgewählt aus den folgenden (i') bis (v'):

(i') ein Blockcopolymer aus einem aromatischen Vinylkohlenwasserstoff mit einem konjugierten Dien,
(ii') ein Polymer aus einem aromatischen Vinylkohlenwasserstoff,
(iii') ein Copolymer aus einem aromatischen Vinylkohlenwasserstoff mit (Meth)acrylsäure,
(iv') ein Copolymer aus einem aromatischen Kohlenwasserstoff mit einem (Meth)acrylat, und
(v') ein gummimodifiziertes Styrolpolymer.

7. Wärmeschrumpfbarer geschäumter Film erhalten durch Dehnen des geschäumten Films oder des geschäumten mehrschichtigen Films wie in einem der Ansprüche 1 bis 6 definiert.

8. Wärmeschrumpfbarer geschäumter mehrschichtiger Film mit einem wärmeschrumpfbaren Film, der auf den geschäumten Film oder den geschäumten mehrschichtigen Film wie in einem der Ansprüche 1 bis 7 definiert laminiert ist.

9. Der wärmeschrumpfbare geschäumte mehrschichtige Film gemäß Anspruch 7 oder 8, wobei die Wärmeschrumpfung mindestens 10% bei 70°C in 10 Sekunden beträgt.

10. Der wärmeschrumpfbare geschäumte mehrschichtige Film gemäß einem der Ansprüche 7 bis 9, worin die natürliche Schrumpfung höchstens 2,5% bei 40°C über sieben Tage beträgt.

11. Wärmeschrumpfbares Etikett aus dem wärmeschrumpfbaren geschäumten mehrschichtigen Film wie in einem der Ansprüche 7 bis 10 definiert.

12. Gefäß, das mit dem wärmeschrumpfbaren Etikett wie in Anspruch 11 definiert bedeckt ist.

**Revendications**

1. Film expansé **caractérisé en ce qu'**il comporte au moins une couche expansée qui contient une composition de résine comprenant de 20 à 100 parties en masse de (a) suivant et de 0 à 80 parties en masse de (b) suivant et qui présente une épaisseur de 30 à 200 μm et une densité de 0, 3 à 0,9 :

(a) un copolymère séquencé dans lequel le rapport d'un hydrocarbure vinylaromatique sur un diène conjugué est de 50/50 à 90/10,
(b) au moins un polymère hydrocarboné vinylaromatique choisi parmi les (i) à (v) suivantes :

(i) un copolymère séquencé d'hydrocarbure vinylaromatique avec un diène conjugué,
(ii) un polymère hydrocarboné vinylaromatique,
(iii) un copolymère d'un hydrocarbure vinylaromatique avec de l'acide (méth)acrylique,
(iv) un copolymère d'un hydrocarbure vinylaromatique avec un (méth)acrylate, et
(v) un polymère de styrène modifié par du caoutchouc.

2. Film expansé selon la revendication 1, dans lequel la viscosité en allongement uniaxial η à 120°C de la composition de résine satisfait à la condition suivants :

$$2,5 > \eta 1,5/\eta 1 > 1,1$$

η1 : viscosité en allongement à une déformation Hencky de 1
η1,5 : viscosité en allongement à une déformation Hencky de 1,5

3. Film expansé selon la revendication 1, dans lequel le (a) ci-dessus est un copolymère séquencé présentant les caractéristiques (1) et (2) suivantes :

(1) le rapport en masse de l'hydrocarbure vinylaromatique sur le diène conjugué est de 60/40 à 90/10,
(2) le rapport en masse d'un groupe de blocs de polymère hydrocarboné vinylaromatique présentant une masse moléculaire moyenne en masse inférieure à 5000 sur un groupe de blocs de polymère hydrocarboné vinylaromatique présentant une masse moléculaire moyenne en masse d'au moins 5000 est de 60/40 à 90/10.

**4.** Film expansé selon l'une quelconque des revendications 1 à 3, dans lequel (a) le copolymère séquencé est un copolymère séquencé de styrène/butadiène, et (b) le polymère hydrocarboné vinylaromatique est au moins un polymère choisi dans l'ensemble constitué par un polystyrène, un copolymère de styrène/acide méthacrylique, un copolymère de styrène/méthacrylate de méthyle, un copolymère de styrène/acrylate de n-butyle, un copolymère de styrène/acrylate de n-butyle/méthacrylate de méthyle et un polystyrène choc.

**5.** Film multicouche expansé comportant au moins une couche expansée telle que définie dans l'une quelconque des revendications 1 à 4 et au moins une couche de résine thermoplastique non expansée.

**6.** Film multicouche expansé selon la revendication 5, dans lequel au moins une couche extérieure dans le cas où il y a trois couches ou plus, ou une couche dans le cas où il y a deux couches, est une couche formée du polymère hydrocarboné vinylaromatique (b') suivant :

(b') au moins un polymère hydrocarboné vinylaromatique choisi parmi les (i') à (v') suivants :

(i') un copolymère séquencé d'un hydrocarbure vinylaromatique avec un diène conjugué,
(ii') un polymère hydrocarboné vinylaromatique,
(iii') un copolymère d'un hydrocarbure vinylaromatique avec de l'acide (méth)acrylique,
(iv') un copolymère d'un hydrocarbure vinylaromatique avec un (méth)acrylate, et
(v') un polymère de styrène modifié par du caoutchouc.

**7.** Film multicouche expansé thermorétractable obtenu par étirage du film expansé ou du film multicouche expansé tel que défini dans l'une quelconque des revendications 1 à 6.

**8.** Film multicouche expansé thermorétractable comportant un film thermorétractable stratifié sur le film expansé ou le film multicouche expansé tel que défini dans l'une quelconque des revendications 1 à 7.

**9.** Film multicouche expansé thermorétractable selon la revendication 7 ou 8, dans lequel le retrait thermique est d'au moins 10 % à 70°C en 10 secondes.

**10.** Film multicouche expansé thermorétractable selon l'une quelconque des revendications 7 à 9, dans lequel le retrait naturel est d'au plus 2,5 % à 40°C pendant sept jours.

**11.** Etiquette thermorétractable faite du film multicouche expansé thermorétractable tel que défini dans l'une quelconque des revendications 7 à 10.

**12.** Récipient recouvert de l'étiquette thermorétractable telle que définie dans la revendication 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1240473 A
- JP 59145220 A
- JP 4236247 A
- JP 2000007806 A
- JP 3007332 A

**Non-patent literature cited in the description**

- **Y. TANAKA.** *RUBBERCHEMISTRY AND TECHNOLOGY,* 1985, vol. 58, 16
- Lecture-Rheology. Kobunshikankokai, 111-116